(19) Europäisches Patentamt

European Patent Office

Office européen des brevets

(11) **EP 2 381 270 A1**

(12) **DEMANDE DE BREVET EUROPEEN**

(43) Date de publication:
**26.10.2011 Bulletin 2011/43**

(51) Int Cl.:
***G01S 13/87*** *(2006.01)*

(21) Numéro de dépôt: **11002814.9**

(22) Date de dépôt: **05.04.2011**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **22.04.2010 FR 1001720**

(71) Demandeur: **EUROCOPTER
13725 Marignane Cédex (FR)**

(72) Inventeur: **Petillon, Jean-Paul
13140 Miramas (FR)**

(74) Mandataire: **Pouillot, Laurent Pierre Paul
GPI & Associés
1330 Rue Guillibert de la Lauzière
EuroParc de Pichauny, Bât B2
13856 Aix-en-Provence Cedex 3 (FR)**

(54) **Localisation continue de grande précision**

(57) L'invention concerne la localisation d'un objet à localiser (2) par rapport à un objet de référence (1), en générant électriquement un signal de localisation (SL) par modulation d'un signal porteur avec un pseudo-bruit.

La modulation est continue et de type Ultra Large Bande (UWB). Une analyse au moyen d'une fonction d'intercorrélation entre ledit signal de localisation (SL) et des signaux réfléchis reçus (SRR1, SRR2), opère une ségrégation entre les ondes ayant suivi un chemin direct et d'éventuelles ondes parasites ayant suivi des chemins indirects, pour en déduire un temps de propagation global le plus court correspondant à celles des dites ondes de localisation (OL) ayant suivi un chemin direct.

L'invention s'applique notamment à un aéronef (1) à voilure tournante, par exemple un drone d'hélicoptère.

EP 2 381 270 A1

**Description**

De manière générale, la présente invention concerne la localisation d'un objet par rapport à un référentiel.

Par localisation, on désigne une détermination continue des positions successives de l'objet à localiser dans l'espace, relativement à un objet de référence.

Dans les exemples, on décrit la localisation continue d'un aéronef (en tant qu'objet à localiser) lors de son guidage automatique par rapport à un référentiel (en tant qu'objet de référence) où l'aéronef doit être posé.

Plus précisément, les problèmes résolus par l'invention sont expliqués en se reportant à un exemple qui vise un système de posé automatique d'aéronef à voilure tournante de type drone (en anglais : « Unmanned Aerial Vehicle » ou UAV) d'hélicoptères. Mais l'invention peut aussi s'appliquer au guidage d'un aéronef habité, tel qu'un hélicoptère de liaison avec une plateforme pétrolière.

Dans cet exemple, la localisation permet un guidage tridimensionnel à distance, pour apponter l'aéronef sur un navire (dans ce cas l'objet de référence). Bien que ce guidage (sans contact tant que les deux objets sont à distance) soit décrit principalement en phase finale d'appontage, il va de soi qu'il couvre également le décollage de l'aéronef posé.

Pour assurer la sécurité et l'efficacité pratique d'un tel posé / décollage, la localisation doit être de grande précision - notamment décimétrique - par rapport à un référentiel qui peut être lui-même mobile (comme dans le cas d'un navire).

En effet, l'approche doit s'achever par l'accouplement d'un agencement d'ancrage (e.g. un harpon) du drone avec un mécanisme (e.g. une grille) d'accrochage complémentaire, du secteur d'appontage du navire.

Ces agencements d'ancrage et mécanismes d'accrochage ont des dimensions réduites (actuellement de l'ordre de 1 m). Ceci implique une mise en concordance minutieuse et quasi ponctuelle, pour assurer leur accrochage mutuel.

Ce système doit permette un appontage ou décollage sûr, jusqu'à un état de mer forte (e.g. force 5), sans risque de choc entre le vecteur aérien (aéronef) et le vecteur navire.

On comprend dès lors qu'une localisation précise en altitude est cruciale. Pour être utilisable, la localisation selon l'invention doit donc être exprimée en termes de coordonnées suivant chacun des trois axes d'un repère orthogonal X, Y, Z. La dimension « d'élévation » Z correspond en général à l'altitude.

A chaque instant, la localisation doit intégrer la mobilité propre de l'objet à localiser. Evidemment, la mobilité relative de l'objet de référence doit aussi être prise en compte. De fait, le repère X, Y, Z doit être lié au navire d'appontage. A l'inverse, un système GPS (Global Positioning System en langue anglaise) par exemple fournit une position instantanée d'un objet par rapport à un référentiel terrestre.

Un autre problème est de fournir en continu, c'est-à-dire à chaque instant et tout au long de l'approche et jusqu'à la fin de l'appontage, une localisation fiable de l'aéronef par rapport au navire.

Continuité et fiabilité doivent être indépendantes de l'environnement de l'approche. Or, cette dernière est opérée à proximité d'importantes sources de perturbation (e.g. masses métalliques brouillages, autres systèmes électroniques, etc.) et parfois dans des conditions atmosphériques et de visibilité (brouillard, tempête, verglas, etc.) difficiles.

En termes d'altitude, la précision des systèmes GPS est donc insatisfaisante pour un appontage. Un inconvénient des systèmes GPS est qu'ils ont été conçus pour procurer une localisation d'une précision décamétrique. Les caractéristiques des signaux reflète ce choix initial : la largeur de la fonction d'auto-corrélation du signal de service de positionnement précis (en anglais « Precise Positionning Service » ou PPS) qui détermine la résolution spatiale, n'est que de 30 mètres ($3.10^8$ m/s / 10MHz). Une telle valeur empêche de discriminer l'onde directe d'une onde réfléchie, qui peuvent différer de 2 ou 3 mètres. Ceci rend les systèmes GPS inutilisables auprès des constructions métalliques ou les trajets multiples d'ondes (multi-trajets) sont nombreux.

Dans le même ordre d'idées, les guidages d'aéronefs par centrales inertielles sont inappropriés car ils présentent une précision de l'ordre du kilomètre alors qu'un atterrissage requiert une précision de l'ordre de 10 centimètres.

Quant aux systèmes d'atterrissage aux instruments dits « ILS » (Instrument Landing System) comme ceux dont on équipe les pistes d'aéroports, ils seraient éventuellement adaptables à un porte-avions, mais pas aux navires plus petits susceptibles d'accueillir un aéronef de moins d'une tonne.

Donc, pour l'appontage d'un aéronef à voilure tournante (e.g. drone ou hélicoptère habité), ces techniques connues ne permettent pas, tout au long de l'approche, des précisions angulaires cumulées de localisation et de guidage qui doivent être de l'ordre d'un degré d'angle (1°), en site comme en gisement. Les manoeuvres d'approche débutant en général à une distance de l'ordre de quelques centaines de mètres, les techniques connues n'assurent pas une telle précision.

En synthèse, pour un appontage automatique d'aéronefs à voilure tournante (e.g. drones d'hélicoptères), les systèmes connus (ou UARS : UAV Automatic Recovery System) ne sont pas suffisamment précis, ne sont pas opérables sous des conditions météorologiques difficiles et ne sont pas faciles à installer. Cette difficulté d'installation s'observe notamment autant sur les navires (faible empreinte logistique souhaitée) que sur les drones (faibles masse, encombrement et consommation d'énergie souhaitées).

Ceci étant, citons diverses techniques connues pour localiser un véhicule, en particulier un drone.

Une technique de localisation de drone consiste à utiliser un radar de poursuite comprenant une antenne motorisée orientable. L'antenne émet un signal focalisé, qui est réfléchi par le drone. L'antenne radar capte ce signal réfléchi et pointe vers le drone. L'orientation de l'antenne radar désigne la direction où se trouve le drone. La mesure du temps de propagation du signal entre le drone et l'antenne radar est indicative de sa distance.

Une localisation de ce type est proposée par la société Sierra Nevada Corporation, dans le document « URCARS-V2, Unmanned Aerial Vehicle Common Automatic Recovery System - Version 2 for shipboard opérations », qui est disponible sous :

http://www.sncorp.com/PDFs/ATCALS/UCARS-V2%20Product%20Sheet.pdf .

Des servomécanismes orientent l'antenne radar, ce qui limite la dynamique de poursuite. La présence d'éléments en mouvement alourdit les coûts, consommation d'énergie, maintenance, la fiabilité et l'usure de cette mise en oeuvre. Par ailleurs, les possibilités restreintes d'orientation de l'antenne limitent l'étendue des plages d'approche de l'aéronef à quelques directions relativement convergentes.

A l'inverse, l'un des objectifs de l'invention est qu'elle permette des approches divergentes de l'objet à localiser, c'est-à-dire que celui-ci puisse approcher ou s'éloigner de son référentiel suivant quasiment n'importe quelle direction.

Une autre technique de localisation de drone est proposée par la société Geneva Aerospace. Cette technique est basée sur un système dénommé RGPS (Relative Global Positioning System en langue anglaise) qui utilise le système GPS. La comparaison des mesures GPS relevées par un récepteur GPS sur l'aéronef avec les mesures GPS relevées par un récepteur GPS d'un site de référence permet de réduire l'erreur de localisation du récepteur GPS de l'aéronef.

Le principal défaut de cette mise en oeuvre RGPS à proximité de grandes structures métalliques est l'imprécision induite par la présence de multi-trajets, qui peuvent provoquer des erreurs de plusieurs mètres. L'un des objectifs de la présente invention est de combattre ces multi-trajets.

Encore une autre technique de localisation de drone est basée sur l'utilisation d'images issues de plusieurs caméras montées écartées les unes des autres sur un site de référence, de façon à offrir une vision stéréoscopique propice à la localisation.

Cette technique à base de caméras est inutilisable en cas de brouillard ou d'intempéries. De plus, pour que les mesures soient suffisamment précises, les caméras doivent être fortement espacées les unes des autres, tout en restant précisément harmonisées entre-elles, ce qui est difficile à réaliser en pratique.

Citons également des documents relatifs au domaine technique du guidage de véhicules.

Le document WO2010016029 décrit un système de localisation de véhicule terrestre, aérien ou naval, basé sur un signal porteur sous forme d'ondes modulées avec un pseudo-bruit. Un temps de propagation et un décalage par effet Doppler sont mesurés. Une corrélation bi dimensionnelle d'un signal réfléchi et d'un signal de référence de réplication des ondes du signal porteur. Ce signal porteur est de bande large, e.g. microonde. Ce signal se réfléchit sur des structures du véhicule, e.g. ses antennes. Ce document ne décrit pas une modulation de signal porteur avec un pseudo bruit de type ULB (UWB). Ce document ne décrit pas au moins deux moyens de réception dédiés aux ondes de localisation sur l'objet de référence. Ce document ne décrit pas un objet de référence pouvant être mobile tout comme l'objet à localiser. Ce document ne décrit pas la déduction d'un temps de propagation global le plus court correspondant à l'onde de localisation ayant suivi le plus court chemin.

Le document US2008062043 décrit la détermination de la positon d'un objet cible, tel qu'un avion de ligne. Une fonction de cadrage est appliquée de manière répétitive à un premier signal tandis qu'un second signal faisant partie d'une paire de signaux radio reçus par un couple de senseurs passifs depuis l'objet cible. Cependant, un décalage temporel est appliqué à une fonction de cadrage pendant un intervalle de corrélation. Des pulsations reçues par ces senseurs sont présumées directes et d'autres plus tardives sont présumées voir subi une propagation multi-trajets [0025]. Un pic de corrélation est déterminé, et ces pics sont comparés pour déterminer la position de l'objet cible. Ce document ne décrit pas une modulation de signal porteur avec un pseudo bruit de type ULB (UWB). Ce document ne décrit pas un objet de référence pouvant être mobile tout comme l'objet à localiser. Ce document ne décrit pas l'émission depuis un objet à localiser, du signal de référence. Ce document ne décrit pas la déduction d'un temps de propagation global le plus court correspondant à l'onde de localisation ayant suivi le plus court chemin.

Le document FR2836554 décrit la localisation d'un aéronef sans pilote. Il semble correspondre au démonstrateur de drone d'hélicoptère Hetel développé pour les Sociétés Isnav et ECT depuis 1998 et présenté en 2000. Ce document décrit l'utilisation de liaisons de données montantes et descendantes, de préférence préexistante entre l'aéronef et des moyens sol situés par exemple sur le pont d'un bateau, liaisons de données complétées par des émetteurs et des récepteurs au sol ou sur le pont dudit bateau. La position de l'hélicoptère est calculée à partir de mesures de différences de temps de parcours. Cette localisation s'applique à tout aéronef, piloté ou non piloté et notamment aux hélicoptères non pilotés qui doivent atterrir sur le pont d'un bateau. Ce document ne décrit pas une modulation de signal porteur avec un pseudo bruit de type ULB (UWB).

Le document US 2008 204 307 décrit un dispositif semi conducteur pour appareil à étalement de spectre, appliqué dès une phase de combinaison entre un signal porteur à une fréquence donnée (onde radio), avec un signal utile dont une pseudo fréquence est relativement proche de celle du signal porteur. Ce document prévoit l'emploi d'un radar à étalement de spectre pour la modification de trajectoire linéaire de véhicules terrestres, pour l'évitement d'obstacles. Ce document ne prévoit pas que les mesures de temps de propagation sont effectuées selon au moins deux trajets d'ondes distincts.

Le document EP 1 865 337 décrit un appareil à radar à étalement de spectre, avec une unité de transmission qui génère un signal à étalement de spectre en employant un premier signal d'oscillateur et un code PN transmis. Cet appareil est prévu pour la modification de trajectoire linéaire de véhicules terrestres, pour l'évitement d'obstacles.

Le document WO 2007 063 126 décrit un système de guidage pour l'atterrissage automatique d'aéronefs, avec un dispositif électromagnétique de détection et de localisation, positionné au sol pour les mesures. La distance séparant le dispositif au sol de l'aéronef et sa position angulaire par rapport à une direction de référence, est déterminée à partir de l'écho réfléchi par ledit aéronef sous forme d'onde sinusoïdale continue,

La présente invention vise à remédier aux inconvénients des techniques connues, en proposant une localisation sans recours à des éléments mécaniques mobiles (en anglais « Solid state »), qui est tridimensionnelle, continue et hautement précise, notamment en altitude.

A cet effet, l'invention est définie par les revendications.

Par exemple, un objet de l'invention est un procédé de localisation d'un objet à localiser par rapport à un trièdre de référence lié à un objet de référence. Ce procédé inclue de générer électriquement un signal de localisation par modulation d'un signal porteur avec un pseudo-bruit. Cette modulation produit un étalement de spectre dudit signal de localisation, ledit signal de localisation étant émis sous forme d'ondes de localisation à l'aide d'au moins un émetteur d'ondes.

De telles ondes de localisation sont reçues et transformées en signal réfléchi reçu de forme électrique et ce signal réfléchi reçu est traité de façon à déterminer au moins un temps de propagation des dites ondes de localisation. A partir duquel temps de propagation, est calculé un positionnement relatif desdits objets.

Selon une réalisation, on :

- génère électriquement ledit signal de localisation et émet lesdites ondes de localisation depuis l'objet de référence, la modulation dudit signal porteur avec ledit pseudo-bruit étant continue et de type Ultra Large Bande,

- réfléchit lesdites ondes de localisation à l'aide d'un moyen de réflexion situé sur l'objet à localiser,

- réalise la réception des ondes de localisation par au moins deux moyens de réception disposés sur l'objet de référence, qui transforment chacun les ondes de localisation respectivement en un signal réfléchi reçu, sous forme électrique,

- traite les signaux réfléchis reçus par analyse au moyen d'une fonction d'intercorrélation entre ledit signal de localisation et chacun des signaux réfléchis reçus, afin d'opérer une ségrégation entre les ondes de localisation ayant suivi un chemin direct et les éventuelles ondes de localisation parasites ayant suivi des chemins indirects, et

- déduit le temps de propagation global le plus court correspondant à celles desdites ondes de localisation ayant suivi un chemin sans réflexion parasite.

Selon une réalisation, pour générer électriquement le signal de localisation par modulation, le signal porteur et le pseudo-bruit sont dans la gamme de fréquences électromagnétiques micro-ondes, et la modulation de type Ultra Large Bande possède une largeur de bande relative de l'ordre de 0,5.

Selon une variante, la fréquence du signal porteur est de l'ordre de 2,4 GHz et la fréquence du pseudo-bruit est de l'ordre de 600 MHz.

Selon une réalisation, le signal de localisation transfère en outre des informations entre l'objet à localiser et l'objet de référence, notamment des informations de localisation transmises depuis l'objet de référence vers l'objet à localiser.

Selon une autre réalisation, l'onde de localisation est de nature acoustique, et le signal porteur et le pseudo-bruit sont dans la gamme des fréquences acoustiques de type ultrasons de l'ordre d'au moins 20 KHz.

Selon une variante, lorsque les ondes de localisation sont réfléchies par des moyens de réflexion actifs dans la gamme des fréquences acoustiques, on opère un changement de fréquence du signal de localisation, de sorte que sont évités les couplages parasites par effet Larsen.

Selon encore une autre réalisation, l'onde de localisation est transmise sous forme lumineuse. Par exemple, il s'agit d'une lumière infrarouge.

Un autre objet de l'invention vise un dispositif de localisation prévu pour mettre en oeuvre le procédé évoqué.

Pour la localisation d'un objet à localiser par rapport à un trièdre de référence, c'est l'objet de référence qui porte ce trièdre de référence.

Selon une réalisation, l'objet à localiser est un aéronef et l'objet de référence portant ledit trièdre de référence est un navire. Par exemple, il s'agit respectivement d'un drone d'hélicoptère et d'un navire apte à assurer l'appontage dudit drone.

Selon une variante, l'objet à localiser est le centre d'une aire d'appontage d'un navire et l'objet de référence portant ledit trièdre de référence est un aéronef.

Selon une autre réalisation, ledit moyen de réflexion est de type actif.

Selon encore une autre réalisation, ledit moyen de réflexion est de type passif, notamment de type catadioptre pour une onde de localisation lumineuses ou de type réflecteur en coin de cube pour une onde de localisation électromagnétiques micro-ondes.

Selon encore une variante, l'émission est opérée sous forme d'ondes électromagnétiques micro-ondes. Si l'émission est opérée sous forme d'ondes électromagnétiques micro-ondes, des émetteurs ainsi que des récepteurs de ces ondes de localisation, sur l'objet de référence et sur l'objet à localiser sont respectivement des antennes d'émission et de réception.

Dans une autre réalisation, l'émission est opérée sous forme d'ondes acoustiques. Si l'émission est opérée sous forme d'ondes acoustiques, un émetteur ainsi que des capteurs de ces ondes de localisation, sur l'objet de référence et sur l'objet à localiser sont respectivement un haut-parleur d'émission et des microphones de réception.

Encore un autre objet de l'invention est un aéronef du type prévu pour la mise en oeuvre du procédé évoqué. Selon une réalisation, l'aéronef est à voilure tournante.

L'invention et ses avantages apparaîtront avec plus de détails dans la description qui suit, et qui illustre un exemple de réalisation de l'invention, donné sans aucun caractère limitatif, en référence aux figures annexées qui représentent :

- la figure 1 : un objet de référence et un objet à localiser distants l'un de l'autre ainsi que des composants d'un dispositif selon une première variante de l'invention ;

- la figure 2: des étages de traitement selon un procédé de localisation d'aéronef conforme à l'invention ;

- la figure 3 : un premier mode de réalisation du moyen de réflexion embarqué dans l'objet à localiser, par exemple un réflecteur passif tel qu'un agencement de panneaux orthogonaux formant une sorte de « catadioptre » ;

- la figure 4 : un deuxième mode de réalisation du moyen de réflexion embarqué dans l'objet à localiser, par exemple un réflecteur actif tel qu'un répéteur ; et

- la figure 5 : un objet de référence 1, avec une variante du moyen de réception, et des moyens d'émission.

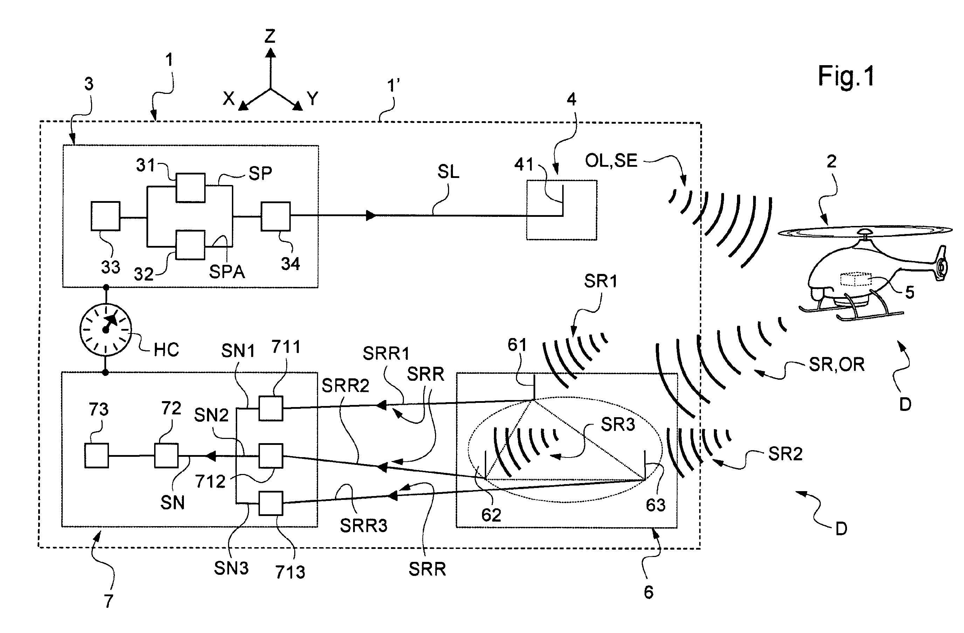

Sur les figures 1, 3 à 4 sont représentées trois directions X, Y et Z orthogonales les unes aux autres. D'ores et déjà, on remarque que le repère orthogonal X, Y, Z est appelé « trièdre de référence », est virtuel, et lié à un objet de référence 1, à savoir un objet à atteindre ou d'origine pour l'objet à localiser.

La direction X est dite longitudinale. Et une autre direction Y est dite transversale. Une troisième direction Z est dite « d'élévation ». En vol, c'est sensiblement suivant la direction Z que sont mesurés les changements d'altitude.

La figure 1 représente un objet à localiser 2 distant de l'objet de référence 1.

Sans que ceci soit limitatif, dans les exemples illustrés, l'objet de référence 1 est un navire. Quant à l'objet à localiser 2, il s'agit d'un drone d'hélicoptère dans ces mêmes exemples.

Il va de soi que l'invention s'applique à d'autres types d'objets de référence 1 et d'objets à localiser 2, par exemple une zone terrestre de posé (en tant que référentiel) et aéronef à voilure fixe ou tournante (à localiser).

Par la suite on considère à titre d'exemple que l'objet de référence 1 comprend une aire d'atterrissage 1' qui peut-être disposée sur le pont d'un navire.

Dans les explications qui suivent, l'objet ou drone 2 est en phase d'approche de l'objet de référence 1, en vue d'un atterrissage sur ledit objet de référence 1. Bien que cet exemple de l'invention soit décrit en phase finale d'appontage, il va de soi qu'elle couvre également le décollage du véhicule aérien, à savoir le drone 2 apponté.

Plus largement encore, l'invention vise toute localisation d'un objet 1 qui peut être mobile, par rapport à un référentiel, qui lui aussi peut être statique ou mobile.

Selon cet exemple, l'invention prend la forme d'un dispositif D de localisation de l'objet à localiser 2, avec un moyen de réception 6 au sein de l'objet 1.

On note que ce dispositif D de localisation est constitué de divers composants physiques et logiques, dont certains font partie de l'objet de référence 1 et d'autres de l'objet à localiser 2.

Sur la figure 1, une partie du dispositif D sur l'objet de référence 1 comporte un moyen de production 3 permettant de produire un signal de localisation SL.

Cette partie du dispositif D sur l'objet 1 comporte également des moyens d'émission 4 avec une antenne d'émission 41. Ces moyens d'émission 4 reçoivent ledit signal de localisation SL en provenance du moyen de production 3.

Ces moyens d'émission 4 diffusent un signal d'émission SE, sous forme d'ondes OL émises depuis l'objet de référence 1.

Par modulation d'un signal porteur avec un pseudo-bruit, on produit un étalement de spectre dudit signal de localisation SL qui est émis en continu sous forme d'ondes de localisation OL à l'aide de l'émetteur d'ondes des moyens d'émission 4. Notons que dans certains modes de réalisation de l'invention, les moyens d'émission 4 peuvent comporter plusieurs signaux de localisation distincts et plusieurs antennes émettrices.

Ce signal d'émission SE sous forme d'ondes OL est destiné à être capté par un moyen de réflexion 5. Ce moyen de réflexion 5 qui fait partie du dispositif D de localisation, est installé sur l'objet à localiser 2, à savoir un drone d'hélicoptère sur la figure 1.

Une fois capté par le moyen de réflexion 5, ce signal d'émission SE génère à son tour un signal réfléchi SR. A l'instar du signal d'émission SE, le signal réfléchi SR est une onde OR qui est destinée à être captée par les moyens de réception 6 sur l'objet 1, à savoir un navire sur lequel le drone doit apponter, sur la figure 1.

Selon l'invention, l'onde OR qui transmet le signal réfléchi SR reçu par l'objet de référence 1 en plusieurs points, est transformée en signaux réfléchis reçus SRR. Ces signaux réfléchis reçus SRR sont de forme électrique.

On expose plus loin comment ces signaux réfléchis reçus SRR sont traités de façon à déterminer au moins un temps de propagation des dites ondes de localisation OL. C'est à partir de ces temps de propagation qu'est calculé le positionnement relatif instantané desdits objets 1 et 2.

A cette fin, les moyens de réception 6 captent un signal réfléchi SR et un moyen d'analyse 7 permettant à partir des signaux réfléchis reçus SRR de déterminer les coordonnées de la position de l'objet à localiser.

Sur la figure 1, le moyen de production 3 comporte un oscillateur 31 générant un signal porteur SP sinusoïdal, c'est-à-dire périodique. Dans des réalisations, l'oscillateur 31 est commandé par tension (en anglais « Voltage Controlled Oscillator ou VCO).

Ce moyen de production 3 comporte aussi un générateur de séquences pseudo-aléatoires 32 élaborant une séquence pseudo-aléatoire désignée par l'acronyme « SPA » sur la figure 1. Cette séquence SPA est périodique, mais elle a des propriétés proches de celles d'une séquence aléatoire, d'où l'appellation de séquence pseudo-aléatoire. Elle est composée d'une suite prédéfinie d'états numériques binaires.

Toujours sur la figure 1, le moyen de production 3 comporte une horloge de référence 33 pour la synchronisation (comme illustré en HC) d'un moyen d'analyse 7. Ce moyen d'analyse 7 est lui-même connecté aux signaux réfléchis reçus SRR issus du moyen de réception 6. De fait, ce moyen d'analyse 7, les moyens d'émission 4 et le moyen de réception 6 sont synchronisés.

Sur la figure 1, l'oscillateur contrôlé en tension électrique 31 et le générateur de séquences pseudo-aléatoires 32 sont asservis à l'horloge de référence 33. De la sorte le signal porteur SP et la séquence pseudo-aléatoire SPA présentent un déphasage constant dans le temps, ce qui produit finalement un signal de localisation SL « cohérant ».

Le moyen de production 3 comporte sur la figure 1, un mélangeur 34 qui réalise une modulation du signal porteur SP avec la séquence pseudo-aléatoire SPA. De la sorte, le signal de localisation SL présente un spectre étalé dans le domaine fréquentiel.

Selon l'invention, un traitement par inter-corrélation permet de calculer le décalage en temps du signal de localisation par rapport au signal réfléchi reçu SRR avec un pouvoir de séparation des pics amélioré grâce à l'ultra large bande (UWB).

Dans le cadre de l'invention, le pic d'auto corrélation est étroit grâce à la large bande de modulation par le pseudo bruit.

On comprend que le signal porteur SP, le signal de localisation SL, le signal émis SE, le signal réfléchi SR et le signal réfléchi reçu SRR peuvent être des signaux de types divers, selon les réalisations de l'invention.

Selon une réalisation, les ondes de localisation sont de nature acoustique. Elles sont réfléchies par l'objet 2 (le drone sur la figure 1) par des moyens de réflexion 5 actifs dans une gamme de fréquences acoustiques. Alors, on peut opérer si nécessaire un changement de fréquence au sein du signal de localisation SL, de sorte que sont évités les couplages parasites par effet Larsen.

Selon une autre réalisation, les ondes de localisation sont de nature électromagnétique. Pour générer électriquement le signal de localisation SL par modulation, le signal porteur et le pseudo-bruit sont alors dans la gamme des micro-ondes.

Selon une variante, la fréquence du signal porteur est de l'ordre de 2,4 GHz et la fréquence du pseudo-bruit est de l'ordre de 600 MHz. Alors, la modulation de type Ultra Large Bande possède une largeur de bande relative de l'ordre de 0,5.

Comme évoqué, le signal réfléchi SR peut servir de « Datalink », et véhiculer en outre des informations entre l'objet 2 à localiser et l'objet de référence 1. Notamment, ces informations de localisation transmises depuis l'objet de référence 1 vers l'objet à localiser 2 peuvent participer au guidage.

Selon encore une réalisation, l'onde de localisation OL est transmise sous forme lumineuse. Par exemple, il s'agit d'une lumière infrarouge.

Selon une réalisation dans laquelle les ondes sont de nature acoustique, pour générer électriquement le signal de localisation SL par modulation, le signal porteur et le pseudo-bruit sont dans la gamme des fréquences acoustiques de type ultrasons, c'est-à-dire de l'ordre d'au moins 20 KHz.

Selon une première variante de réalisation du dispositif D, le moyen de réception 6 comporte au moins deux organes de réception 61 - 63. Sur la figure 1, on compte trois organes de réception 61, 62 et 63 sous forme d'antennes liées à l'objet de référence 1.

Dans certaines réalisations, les antennes 61 - 63 du moyen de réception 6 sont des antennes planaires. Les centres de phase de ces trois antennes 61 - 63 de réception sont non alignés.

Afin d'assurer une précision adéquate, les antennes de réception 61, 62, 63 doivent être écartées les unes des autres. Le choix de cet espacement est dicté par l'optimisation de la sensibilité du dispositif D et pour garantir une moindre dilution de précision de positionnement.

Ces centres de phase des trois antennes de réception 61, 62, 63 définissent sur la figure 1 un triangle équilatéral.

Sur la figure 1 et dans le cas d'ondes électromagnétiques micro-ondes par exemple de 2,4 GHz, ce cercle présente un diamètre de l'ordre de un mètre.

Mais, pour des longueurs d'ondes différentes, la valeur optimale du diamètre sera différente. Avec des fréquences bien plus élevées, par exemple de plusieurs dizaines de Gigahertz, 200 mm de diamètre seront suffisants pour une localisation de qualité appropriée à l'appontage.

Un dispositif selon l'invention étant basé sur des mesures de temps de propagation, l'antenne d'émission 41 et les antennes de réception 61, 62, 63 peuvent être conçues avec des diagrammes de rayonnement très larges sans dégradation de performances. Le dispositif peut alors fonctionner avec une plage angulaire de fonctionnement très importante et n'a pas besoin de recourir à un pointage préliminaire.

Pour des raisons de compacité, l'antenne d'émission 41 est quant-à-elle située à proximité des organes de réception 61, 62, 63. On choisit en pratique une configuration qui optimise la dilution de précision en altitude, afin de minimiser les erreurs de localisation suivant la direction Z.

Sur la figure 1, le centre de phase de l'antenne d'émission 41 est favorablement situé au barycentre du triangle équilatéral défini par les centres de phase des trois antennes de réception.

Sur cette figure, le moyen d'analyse 7 comporte trois convertisseurs analogique/numérique 711, 712 et 713 permettant de convertir, après un étage de traitement appelé changement de fréquence, respectivement chacun des signaux réfléchis reçus SRR.

Alors, ces signaux réfléchis reçus SRR sont de forme analogique, SRR1, SRR2, SRR3 puisqu'issus respectivement des antennes de réception 61, 62, 63. On opère leur conversion en signaux numériques SN, respectivement SN1, SN2 et SN3. Le but de cette conversion est évidemment de pouvoir les traiter par la suite, avec des calculateurs (assimilés au moyen d'analyse 7 sur la figure 1).

Puis un corrélateur numérique 72 détermine le temps de propagation de chacun des signaux réfléchis reçus SRR1, SRR2, SRR3. Enfin, un navigateur 73 calcule à partir des différents temps de propagation déterminés par le corrélateur numérique 72, une solution des coordonnées de position du véhicule à localiser, à savoir l'aéronef 2. Optionnellement, le navigateur 73 calcule par ailleurs une matrice de covariance des erreurs de position.

On a vu que dans des réalisations, dans la partie intégrée au véhicule 2 à localiser, le dispositif D de localisation selon l'invention comporte un moyen de réflexion 5 de type passif. Les réflecteurs passifs, ne nécessitent pas de source émettrice et utilisent les capacités de réflexion dans le spectre choisi (visible, proche infrarouge, infrarouge ou micro-ondes).

Ce moyen de réflexion 5 agit à la façon d'un « catadioptre » pour une onde de localisation OL lumineuse. De même, un autre moyen de réflexion 5 de type passif est un réflecteur en coin de cube agit de manière similaire sur une onde de localisation (OL) électromagnétique dans la gamme de fréquence des micro-ondes.

Dans le cas où le dispositif D de localisation est approprié à l'émission d'ondes OL électromagnétiques micro-ondes, les émetteurs ainsi que des récepteurs de ces ondes OL sur l'objet de référence 1 et sur l'objet à localiser 2 sont respectivement des antennes d'émission et de réception.

Par contre, dans le cas où le dispositif D de localisation est approprié à l'émission d'ondes OL acoustiques, un émetteur ainsi que des capteurs de ces ondes de localisation OL sont un haut-parleur d'émission et des microphones de réception, respectivement sur l'objet de référence 1 et sur l'objet à localiser 2.

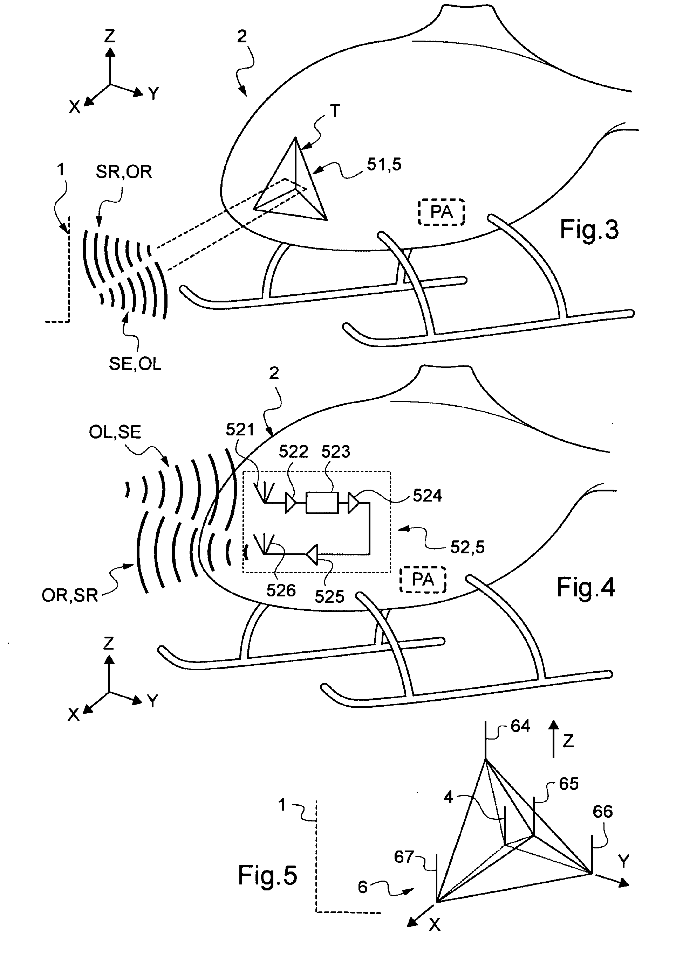

Sur la figure 3, un premier mode de réalisation du moyen de réflexion 5, est un réflecteur 51 passif, c'est-à-dire un assemblage de trois faces conductrices perpendiculaires deux à deux et ayant la propriété de renvoyer un signal en direction de sa provenance. Ici, le signal émis SE en provenance de l'objet de référence 1 est donc réfléchi par le réflecteur 51 embarqué, en un signal réfléchi SR sous forme d'ondes OR en direction de la provenance du signal émis SE (ondes OL). Ce réflecteur 51 forme un ensemble de trois surfaces de réflexion placées à angles droits pour former un trièdre T.

La figure 4 illustre un deuxième mode de réalisation du moyen de réflexion 5, sous forme de réflecteur actif de type répéteur 52.

Il peut en outre être intéressant que la trajectoire de l'objet 2 puisse être modifiée sans intervention extérieure, de sorte que l'approche finale et l'appontage se déroulent automatiquement.

Dans ce cas, il faut transmettre des informations au véhicule 2 afin qu'un pilote automatique (PA, figure 3 et 4) de l'objet 2 évalue la position de l'aire d'atterrissage 1' et donc la direction à suivre. A titre d'exemple, ces informations concernent la position et les angles d'attitude de l'aire d'atterrissage 1', dans le cas où l'aire d'atterrissage est située sur un navire en mouvement. Toujours à titre d'exemple, on peut transmettre des informations sur les phénomènes climatiques tels que des vents traversiers si besoin. Ce type d'informations peut être envoyée à l'objet 2, en les combinant au signal SE émis ; et reçues par le réflecteur actif de type répéteur 52.

Sur l'exemple de la figure 4, le répéteur 52 comporte une antenne réceptrice 521 pour capter le signal émis SE (ondes OL) ainsi qu'un amplificateur 522 et un filtre passe-bande 523 permettant de ne sélectionner que la bande de fréquences utile. En outre le répéteur 52 comporte un contrôle automatique de gain 524. De la sorte, le signal réfléchi SR (ondes OR) qui est réémis en sortie du répéteur 52 a une puissance constante, quelque soit la distance séparant les objets 1 et 2.

On parle de « données montantes » dans les modes de réalisation où le répéteur 52 joue aussi le rôle de système de liaison de données. La collecte desdites données montantes s'effectue en sortie du contrôle automatique de gain 524, par des systèmes de bord (non représentés). Le répéteur 52 comporte également une antenne émettrice 526 retransmettant le signal SE, après un éventuel changement de fréquence, et générant ainsi le signal réfléchi SR, sous forme d'ondes OR.

On rappelle que ce rôle de liaison de données n'est pas le coeur de l'invention, bien qu'utile en pratique. Un réflecteur actif peut donc recevoir le signal émis SE et réémettre un signal réfléchi SR tout en ayant collecté les informations utiles pour la conduite de la mission.

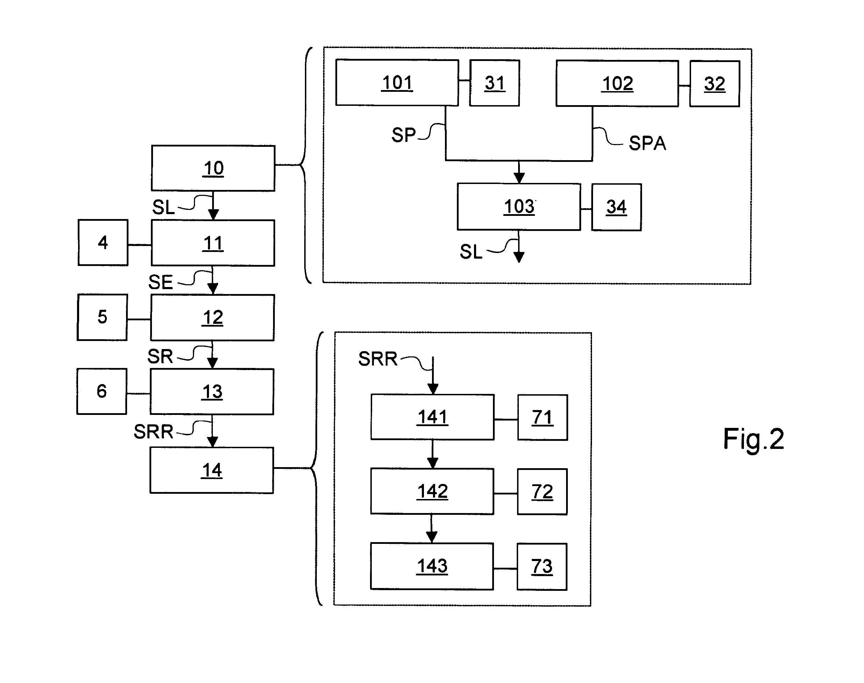

La figure 2 illustre un exemple de procédé de localisation mis en oeuvre par le dispositif D de l'invention.

En synthèse, ce procédé prévoit qu'on :

- génère électriquement ledit signal de localisation SL et émet lesdites ondes de localisation OL depuis l'objet de référence 1, la modulation dudit signal porteur avec ledit pseudo-bruit étant continue et de type Ultra Large Bande (UWB),

- réfléchit lesdites ondes de localisation OL à l'aide du moyen de réflexion 5 situé sur l'objet à localiser 2,

- réalise la réception des ondes de localisation OL par au moins deux moyens de réception 6 disposés sur l'objet de référence 1, ces moyens 6 transformant chacun les ondes de localisation OL respectivement en un signal réfléchi reçu (SRR1, SRR2, etc.) sous forme électrique,

- traite les signaux réfléchis reçus une fois transformés, par analyse au moyen d'une fonction d'inter-corrélation entre ledit signal de localisation SL et chacun des signaux réfléchis reçu, afin de déterminer le temps de parcours tout en opérant une ségrégation entre les ondes ayant suivi un chemin direct et les éventuelles ondes parasites ayant suivi des chemins indirects, et

- déduit le temps de propagation global le plus court correspondant à celles desdites ondes de localisation OL ayant suivi un chemin sans réflexion parasite.

L'objet de référence 1 ainsi que l'objet à localiser 2, sont dans le cas général en mouvement relatif l'un par rapport à l'autre. Dans ces conditions, on considère par exemple, mais non exclusivement, que l'objet 2 est en phase d'approche en vue d'un atterrissage sur l'aire d'atterrissage 1', par exemple lorsque l'objet 2, est situé à une distance approximative inférieure à 200 mètres de l'aire d'atterrissage 1'.

Avant cette phase d'approche finale ou au-delà d'une proximité immédiate par rapport à l'objet de référence 1, la position de l'objet 2 peut-être déterminée par des moyens classiques tels qu'un système GPS ou une centrale inertielle. Ces moyens offrent une précision suffisante lorsque l'objet 2 est éloigné de l'aire d'atterrissage 1', mais qui se révèle insuffisante lorsque l'objet 2 débute notamment sa phase d'approche finale. A partir de la phase d'approche finale, la localisation de la position de l'objet 2 doit se faire avec une précision accrue, de l'ordre d'une dizaine de centimètres, jusqu'à l'atterrissage complet sur l'aire d'atterrissage 1'.

Lorsque l'objet 2 est en phase d'approche finale, le procédé de localisation selon l'invention peut alors débuter.

La localisation par rapport à l'objet de référence 1 selon l'invention est basée sur la mesure des temps de propagation aller-retour d'un signal: un signal de localisation est émis depuis l'objet de référence 1, il est capté par l'objet 2 qui le renvoie avec un retard négligeable, de sorte qu'il peut être capté par l'objet de référence 1. La mesure de plusieurs temps de propagation du signal de localisation permet de définir la position de l'objet 2 par rapport à un référentiel lié à l'objet de référence 1.

Dans l'étage de production 10 du signal de localisation SL de type électrique UHF (Ultra Haute Fréquence), un oscillateur contrôlé en tension électrique 31, génère un signal porteur SP dans l'étage de génération 101. Le signal porteur SP, est de type électromagnétique sur la bande de radiofréquence (par exemple de 2,4 GHz) afin d'avoir une longueur d'onde suffisamment faible pour que la localisation de l'objet 2 se fasse avec la précision requise. De façon avantageuse et de manière à minimiser la puissance émise sur les fréquences harmoniques, le signal porteur SP est sinusoïdal.

Bien qu'il n'y ait pas un lien aussi direct entre la longueur d'onde et la précision de localisation, puisqu'il est tout à fait possible de réaliser une mesure avec une précision de l'ordre d'une fraction de longueur d'onde, on peut approximativement considérer que si le signal porteur SP a une fréquence de l'ordre de 2.4GHz, soit une période de 0.42 nanoseconde, ceci permet d'obtenir une résolution des échos sensiblement décimétrique, à savoir de l'ordre de 125 mm (longueur d'onde de $0.4210^{-9} \times 3 \cdot 10^8$ où $3 \cdot 10^8$ est la célérité de la lumière en mètres par seconde). Cette précision correspond à celle qui est requise pour l'appontage de l'objet 2.

La séquence pseudo-aléatoire SPA est élaborée par un générateur de séquences pseudo-aléatoires 32 dans l'étage de traitement 102. La séquence pseudo-aléatoire SPA a une structure sélectionnée pour que sa fonction d'auto-corrélation ne présente qu'un seul pic.

Par ailleurs, le choix de l'étalement de spectre agressif (UWB) conduit à une grande acuité dudit pic. Nous verrons ultérieurement que le signal de localisation réémis par l'aéronef sera inter-corrélé à une réplique de la séquence pseudo-aléatoire SPA. La séquence pseudo-aléatoire SPA ayant une fonction d'auto-corrélation présentant un seul pic étroit, cela conduit à un pouvoir de séparation élevé entre le signal direct et les échos.

A titre d'exemple, le générateur de séquences pseudo-aléatoires 32 comporte deux circuits identiques, chacun constitué de :

- un registre à décalage à dix étages ;

- un multiplicateur par un polynôme du mot de 10 bits contenu dans le registre ;

- un générateur de parité agissant sur le résultat généré par ledit multiplicateur, et dont la sortie est connectée à l'entrée du premier des 10 étages du registre à décalage.

Les sorties des deux circuits sont combinées par un opérateur logique « ou exclusif », dont la sortie est ladite séquence pseudo aléatoire SPA.

Le générateur de séquences pseudo-aléatoires 32 comporte donc deux polynômes ce qui offre plus de liberté de réglages et permet la sélection de la séquence présentant les pics secondaires parasites les plus faibles dans sa fonction d'auto-corrélation.

La séquence pseudo-aléatoire résultante contient, à titre d'exemple, une suite de 1023 valeurs binaires, chaque valeur binaire étant générée à une fréquence d'horloge de 600MHz imposée par l'horloge de référence 33. La séquence pseudo-aléatoire complète a donc une durée de :

$$1023 \times \frac{1}{600 \cdot 10^6} = 1.705 \mu s \, .$$

Une fréquence d'horloge élevée de l'ordre de 600MHz permet cependant d'avoir une séquence suffisamment longue pour garantir une mesure non ambiguë sur toute l'étendue de la phase d'approche. En effet la fonction d'auto-corrélation a la même période que le signal de localisation SL, i.e. $1.705 \mu s$ soit une longueur d'onde de l'ordre de 500m (produit $1.705 \cdot 10^{-6} \times 3 \cdot 10^8$). En tenant compte du fait que le temps de vol de l'onde correspond à deux fois la distance à mesurer, on vérifie bien que la portée souhaitée est inférieure à la moitié de cette longueur d'onde (½ 500m > 200m).

Par la suite nous verrons que le signal de localisation réémis par l'objet 2 sera digitalisé (numérisé) avant d'être analysé et comparé à une réplique de la séquence pseudo-aléatoire. Cette digitalisation (numérisation) sera réalisée au moyen d'un convertisseur analogique/numérique qui réalise un échantillonnage cadencé.

Pour calculer les fonctions d'inter-corrélation entre les signaux reçus SRR et le signal de localisation SL, les convertisseurs analogique/numérique doivent opérer à une cadence d'échantillonnage de l'ordre de deux fois 600MHz, soit 1200MHz.

Dans un étage de traitement 103 de modulation, un mélangeur 34 module le signal porteur SP avec la séquence pseudo-aléatoire SPA. Cette modulation consiste en un simple produit entre le signal porteur SP et la séquence pseudo-aléatoire SPA.

Cette multiplication ordinaire dans le domaine temporel correspond à un produit de convolution dans le domaine des fréquences.

Le produit de convolution du signal porteur SP avec la séquence pseudo-aléatoire SPA conduit donc à l'étalement de l'énergie du signal porteur SP sur une largeur de bande égale à celle de la séquence pseudo-aléatoire SPA.

Dans un exemple de réalisation la largeur de bande de la séquence pseudo-aléatoire (2 x 600MHz), exprimée en pourcentage de la fréquence de la porteuse SP (2.4GHz), est de l'ordre de 50%.

Par cet étalement de spectre agressif, on vise notamment une largeur limitée du pic de corrélation, pour garantir que l'invention puisse résoudre et rejeter les multi trajets. On peut donc diminuer les risques d'interférences avec des signaux reçus issus d'échos sur des surfaces réfléchissantes, qu'on appelle « multi trajets ».

Un avantage de la technique de l'étalement de spectre est que sa faible densité spectrale de puissance le rend plus difficilement détectable. Ceci garantit au signal de localisation SL une certaine discrétion.

Dans un étage d'émission 11, le signal de localisation SL est émis sous forme d'onde OL par les moyens d'émission 4, générant ainsi le signal émis SE.

Dans un étage de réflexion 12, le signal émis SE est réfléchi par un moyen de réflexion 5, générant ainsi un signal réfléchi SR.

Dans un étage de réception 13, le signal réfléchi SR est capté par les organes de réception (e.g: 61, 62 et 63). Chaque organe de réception reçoit respectivement les signaux réfléchis (e.g: SR1, SR2 et SR3) et génère respectivement les signaux réfléchis reçus (e.g. : SRR1, SRR2 et SRR3).

Un étage 14 d'analyse des signaux réfléchis se décompose en une succession d'étages de traitement 141, 142 et 143.

Dans cet étage d'analyse 14, les signaux réfléchis reçus SRR1, SRR2, SRR3 par les organes de réception (e.g: 61, 62, 63) sont traités pour calculer les temps de propagation, puis les coordonnées de position de l'objet 2.

Pour cela, les signaux reçus ne sont pas directement numérisés. Ils sont d'abord ramenés en bande de base par un étage de changement de fréquence produisant, pour chacun des signaux reçus, un signal en phase (I) et un autre en quadrature (Q). Ainsi les signaux réfléchis reçus SRR1, SRR2 et SRR3 (à l'origine analogiques) sont convertis en signaux numériques SN1_I, SN1_Q, SN2_I, SN2_Q, SN3_I et SN3_Q dans un étage de changement de fréquence et de conversion 141.

Cette conversion est réalisée au moyen d'un convertisseur analogique/numérique 71.

L'échantillonnage et la conversion analogique/numérique des signaux peut être réalisé de manière continue. Par contre, il peut être avantageux de regrouper les échantillons en lots successifs correspondant à la durée d'une période de séquence pseudo aléatoire SPA. De tels lots se succèdent à une cadence de 600MHz/1023 ≈ 600000 lots / seconde. Opérer une inter-corrélation sur chacun de ces lots dépasse les capacités de traitement des circuits actuels, mais il est acceptable de n'en traiter qu'un sur 1000 par exemple, pour obtenir au final un échantillonnage de la trajectoire à 600Hz, fréquence qui dépasse la plupart du temps largement ce qui est requis pour capturer toute la dynamique de l'objet à localiser.

Dans un étage d'intercorrélation 142, on calcule les différents temps de propagation au moyen d'un corrélateur numérique 72.

Chacun de ces signaux réfléchis reçus SRR1, SRR2, SRR3 est converti en signaux numériques, respectivement SN1 I&Q, SN2 I&Q, et SN3 I&Q. Le temps de propagation de chaque signal réfléchi SR1, SR2, SR3 est calculé par inter-corrélation de chaque signal numérique SN1 I&Q, SN2 I&Q, SN3 I&Q avec une réplique de la séquence pseudo-aléatoire SPA. Cette opération est réalisée au moyen du corrélateur numérique 72 dans l'étage de traitement de corrélation 142.

Ainsi l'analyse par les moyens 7 de la fonction d'inter-corrélation entre chaque signal numérique SN1, SN2, SN3 et la séquence pseudo-aléatoire SPA permet de calculer les temps de propagation $\tau1$, $\tau2$, $\tau3$ de chaque signal réfléchi respectivement SR1, SR2, SR3.

L'un des objectifs de l'invention est d'atteindre un pouvoir séparateur élevé permettant de discerner une onde directe et une onde réfléchie. Ceci est obtenu par la réduction de la largeur du pic de corrélation. Pour ce faire, l'invention s'appuie sur les technologies récentes permettant d'augmenter la fréquence de la porteuse, ainsi que celle du pseudo-bruit, dans le rapport choisi, et celle des traitements numériques. Le facteur limitatif, ou goulot d'étranglement, reste toutefois le corrélateur. Les deux facteurs en balance dans le compromis sont : i) la puissance RF (radio fréquence) émise qu'on désire la plus faible possible, et ii) la cadence des inter-corrélations qui doit rester suffisamment faible pour être compatible des capacités des circuits de traitement disponibles sur le marché. Un corrélateur rapide permet une grande cadence de mesure, qui elle-même permet un effet de moyenne sur le bruit et finalement soit une amélioration du rapport signal / bruit, soit une réduction de la puissance émise requise.

Dans une variante, dans l'étage d'analyse 14 on procède à une inter-corrélation des signaux reçus deux à deux plutôt que des signaux reçus avec une réplique du signal émis. On mesure alors des différences de temps de propagation plutôt que des temps de propagation absolus.

Selon une variante, seulement deux antennes sont mises en oeuvre pour simplifier le dispositif D. Celui-ci ne peut mesurer alors qu'une position « 2D ». Si les deux antennes de réception sont situées dans le même plan horizontal, le dispositif D permet de mesurer la position horizontale. Alors, l'objet 2 étant pourvu d'un équipement de bord de détermination de son altitude (e.g. radio altimètre) on peut se servir de cet équipement pour déterminer la coordonnée manquante.

Dans un étage de navigation 143, un navigateur 73 calcule les coordonnées de position de l'objet 2 dans un référentiel lié à l'objet de référence 1.

Quand on a déterminé les temps de propagation de chaque signal réfléchi SR1, SR2, SR3 sous la forme de trois constantes de temps, respectivement $\tau1$, $\tau2$, $\tau3$, ledit navigateur 73 calcule une solution des coordonnées de position de l'objet 2, dans l'étage de traitement de navigation 143. Cet étage résout un système d'équations selon l'exemple ci-dessous :

$$C \cdot (\tau1 - \Delta\tau) = \sqrt{x^2 + y^2 + z^2} + \sqrt{(x - x1)^2 + (y - y1)^2 + (z - z1)^2}$$

$$C \cdot (\tau2 - \Delta\tau) = \sqrt{x^2 + y^2 + z^2} + \sqrt{(x - x2)^2 + (y - y2)^2 + (z - z2)^2}$$

$$C \cdot (\tau3 - \Delta\tau) = \sqrt{x^2 + y^2 + z^2} + \sqrt{(x - x3)^2 + (y - y3)^2 + (z - z3)^2}$$

Dans cet exemple de système d'équations, on désigne par :

- C : la célérité de la lumière,

- (x1, y1, z1), (x2, y2, z2), (x3, y3, z3) : les coordonnées des antennes de réception, respectivement 61, 62, 63,

- (x, y, z) : la solution recherchée, i.e. les coordonnées de position l'objet 2 dans un référentiel lié à l'objet de référence 1,

- $\Delta\tau$ : la somme des différents retards parasites, incluant notamment les temps de traversée du répéteur et des câblages présents sur l'objet de référence 1.

Dans cet exemple, on a choisi l'antenne émettrice des moyens 4 comme origine des coordonnées (0, 0, 0).

On est donc face à un système de trois équations à trois inconnues. Il peut être résolu de manière numérique en utilisant par exemple la méthode de Newton-Raphson.

Les mesures des temps de propagation $\tau1$, $\tau2$, $\tau3$ pouvant être affectées d'une erreur de précision, le navigateur 73 peut optionnellement déterminer la qualité de son erreur en calculant, par dérivation du système d'équation précédent, la matrice de sensibilité de la position aux erreurs de mesures des distances:

$$\begin{bmatrix} \partial x/\partial\tau1 & \partial y/\partial\tau1 & \partial z/\partial\tau1 \\ \partial x/\partial\tau2 & \partial y/\partial\tau2 & \partial z/\partial\tau2 \\ \partial x/\partial\tau3 & \partial y/\partial\tau3 & \partial z/\partial\tau3 \end{bmatrix}$$

Sur la base de la connaissance à priori de la matrice de covariance des erreurs affectant $\tau1$, $\tau2$, $\tau3$, le navigateur 73 est en mesure de calculer la matrice de covariance, variable en fonction de la position du de l'objet 2, et permet ainsi d'accéder à la statistique « a priori » de l'erreur affectant la solution de position.

Naturellement, la présente invention est sujette à de nombreuses variantes quant à sa mise en oeuvre. Bien que plusieurs réalisations aient été décrites, on comprend qu'il n'est pas concevable de les décrire de manière exhaustive. Il est bien sûr envisageable de remplacer un moyen ou un étage de traitement décrit par un équivalent, sans sortir du cadre de la présente invention.

A ce titre, il est évident, par exemple, que certaines variantes de réalisation peuvent comporter un nombre d'organes de réception supérieur à trois et occuper des positions spécifiques les unes par rapport aux autres différentes de celles décrites, et ce quelque soit leur nombre.

Par ailleurs, l'invention concerne aussi bien la localisation proprement dite d'un aéronef 2 (e.g: drone ou habité) afin d'assurer son approche finale et son atterrissage sur l'objet de référence 1, que son pilotage sécurisé relativement à l'objet de référence 1, sans pour autant provoquer son atterrissage.

Dans certaines situations, l'objet à localiser est une zone d'atterrissage et l'objet de référence est un aéronef.

Bien entendu, l'invention peut s'appliquer à tout autre véhicule qu'un aéronef, même si elle est particulièrement adaptée aux hélicoptères et analogues.

De plus, le dispositif D pourrait si nécessaire être au moins en partie transformé par symétrie, au sens où l'objet à localiser 2 deviendrait l'objet de référence 1 et inversement, quels que soient leurs types respectifs.

Le dispositif D pourrait également faire l'objet d'un dédoublement, de manière à le rendre redondant, en mettant en oeuvre soit des fréquences différentes ou de préférence des codes pseudo aléatoires orthogonaux. L'objectif d'une telle redondance est l'augmentation de la sureté de fonctionnement.

Avant de conclure, revenons sur les manières dont l'invention se distingue notamment d'un système GPS, à savoir ses particularités suivantes :

1) Avec l'invention, l'étalement de spectre est beaucoup plus « agressif », par exemple de 2 x 600MHz contre 2 x 10MHz pour le service militaire du GPS. Ceci permet d'améliorer le pouvoir de séparation dans un rapport de 0.5m à 30m. Il est ainsi possible de discriminer les échos et l'onde directe, ce qui est inaccessible aux systèmes à base de GPS.

On notera que ce pouvoir de séparation n'est pas directement égal à la précision. Il est ainsi possible d'interpoler dans l'intervalle des 0.5m.

2) Dans un dispositif conforme à l'invention, les trajets d'onde comprennent tous un aller-retour entre le référentiel et l'objet 2 à localiser. C'est indispensable pour avoir une bonne précision radiale, alors que l'objet 2 se trouve nettement en dehors de la constellation des organes de réception du référentiel. C'est un deuxième point important, qui permet une constellation d'antennes compacte et facile à installer sur un navire (les trois antennes peuvent n'occuper qu'une surface réduite, de l'ordre du $m^2$).

3) Le corollaire de ce qui précède est que les moyens d'émission 4 et de réception 6 se trouvent cote à cote ce qui élimine le biais des horloges émission / réception. Ceci a pour avantage que là ou un récepteur GPS a besoin de quatre satellites pour résoudre sa position et son biais d'horloge, l'invention n'a besoin que de trois trajets d'onde. Pour parvenir à une bonne localisation tridimensionnelle (3D), et notamment obtenir une bonne précision de site et de gisement, il est classique d'opérer des mesures extrêmement précises des différences entre les temps de propagation dits « pseudo-range » Afin de palier ceci, l'invention propose deux variantes principales:

- l'une effectuant des inter-corrélations entre signal émis et chacun des signaux reçus uniquement ; ou

- l'autre effectuant en outre des inter-corrélations entre chacun des signaux reçus deux à deux, pour affiner les précisions sur les différences entre les temps de propagation (aussi appelées « delta-range ») et donc sur les angles de site et de gisement.

## Revendications

1. Procédé de localisation d'un objet à localiser (2) par rapport à un trièdre de référence lié à un objet de référence (1), ce procédé incluant de générer électriquement un signal de localisation (SL) par modulation d'un signal porteur avec un pseudo-bruit, cette modulation produisant un étalement de spectre dudit signal de localisation (SL), ledit signal de localisation (SL) étant émis sous forme d'ondes de localisation (OL) à l'aide d'au moins un émetteur d'ondes, de telles ondes de localisation étant reçues et transformées en signal réfléchi reçu (SRR) de forme électrique, ce signal réfléchi reçu (SRR) étant traité de façon à déterminer au moins un temps de propagation des dites ondes de localisation (OL), temps de propagation à partir duquel est calculé un positionnement relatif desdits objets (1 ; 2),

**caractérisé en ce que** ce procédé :

génère électriquement ledit signal de localisation (SL) et émet lesdites ondes de localisation (OL) depuis l'objet de référence (1), la modulation dudit signal porteur avec ledit pseudo-bruit étant continue et de type Ultra Large Bande (UWB),

réfléchit lesdites ondes de localisation (OL) à l'aide d'un moyen de réflexion (5) situé sur l'objet à localiser (2), réalise la réception des ondes de localisation (OL) par au moins deux moyens de réception (61, 62) disposés sur l'objet de référence (1), qui transforment chacun les ondes de localisation (OL) respectivement en un signal réfléchi reçu (SRR1, SRR2), sous forme électrique,

effectue un traitement d'analyse des signaux réfléchis reçus (SRR1, SRR2) par analyse au moyen d'une fonction d'intercorrélation entre ledit signal de localisation (SL) et

chacun des signaux réfléchis reçus (SRR1, SRR2), afin d'opérer une ségrégation entre les ondes de localisation (OL) ayant suivi un chemin direct et les éventuelles ondes de localisation (OL) parasites ayant suivi des chemins indirects, et

déduit le temps de propagation le plus court correspondant à celui desdites ondes de localisation (OL) ayant suivi un chemin sans réflexion parasite.

2. Procédé de localisation selon la revendication 1,
**caractérisé en ce que** pour générer électriquement le signal de localisation (SL) par modulation, le signal porteur et le pseudo-bruit sont dans la gamme de fréquences électromagnétiques micro-ondes, et la modulation de type Ultra Large Bande (UWB) possède une largeur de bande relative de sensiblement 0,5.

3. Procédé de localisation selon la revendication 2,
**caractérisé en ce que** la fréquence du signal porteur est sensiblement de 2,4 GHz et la fréquence du pseudo-bruit est sensiblement de 600 MHz.

4. Procédé de localisation selon l'une des revendications 2 ou 3,
**caractérisé en ce que** le signal de localisation (SL) véhicule des informations entre l'objet à localiser (2) et l'objet de référence (1), notamment des informations de localisation transmises depuis l'objet de référence (1) vers l'objet à localiser (2).

5. Procédé de localisation selon la revendication 1, **caractérisé en ce que** pour générer électriquement le signal de localisation (SL) par modulation, le signal porteur et le pseudo-bruit sont dans la gamme des fréquences acoustiques de type ultrasons de l'ordre d'au moins 20 KHz.

6. Procédé de localisation selon la revendication 1,
**caractérisé en ce que**, lorsque les ondes de localisation (OL) sont réfléchies par des moyens de réflexion actifs dans la gamme des fréquences acoustiques, on opère un changement de fréquence au sein du signal de localisation (SL), de sorte que sont évités les couplages parasites par effet Larsen.

7. Procédé de localisation selon l'une des revendications 1 à 6,
**caractérisé en ce que** l'onde de localisation (SL) est transmise sous forme lumineuse.

8. Dispositif (D) de localisation d'un objet à localiser (2) par rapport à un trièdre de référence lié à un objet de référence (1) portant ce trièdre,
**caractérisé en ce que** ce dispositif de localisation est prévu pour mettre en oeuvre le procédé selon l'une des revendications 1 à 7.

9. Dispositif (D) de localisation selon la revendication 8,
**caractérisé en ce que** l'objet à localiser (2) est un aéronef et l'objet de référence (1) portant ledit trièdre de référence est un navire.

10. Dispositif (D) de localisation selon la revendication 9,
**caractérisé en ce que** l'objet à localiser (2) est le centre d'une aire d'appontage d'un navire et l'objet de référence (1) portant ledit trièdre de référence est un aéronef.

11. Dispositif (D) de localisation selon l'une des revendications 8 à 10,
**caractérisé en ce que** ledit le moyen de réflexion (4) est de type actif.

**12.** Dispositif (D) de localisation selon l'une des revendications 8 à 10,
**caractérisé en ce que** ledit moyen de réflexion (4) est de type passif, notamment de type catadioptre pour une onde de localisation (OL) lumineuse, ou de type réflecteur en coin de cube pour une onde de localisation (OL) électromagnétiques micro-ondes.

**13.** Dispositif (D) de localisation selon l'une des revendications 8 à 10,
**caractérisé en ce que** si l'émission est opérée sous forme d'ondes (OL) électromagnétiques micro-ondes, des émetteurs ainsi que des récepteurs de ces ondes de localisation (OL), sur l'objet de référence (1) et sur l'objet à localiser (2) sont respectivement des antennes d'émission et de réception.

**14.** Dispositif (D) de localisation selon l'une des revendications 8 à 10,
**caractérisé en ce que** si l'émission est opérée sous forme d'ondes (OL) acoustiques, un émetteur ainsi que des capteurs de ces ondes de localisation (OL), sur l'objet de référence (1) et sur l'objet à localiser (2) sont respectivement un haut-parleur d'émission et des microphones de réception.

**15.** Aéronef du type pour la mise en oeuvre du procédé selon l'une des revendications 1 à 7,
**caractérisé en ce que** l'aéronef (1) est à voilure tournante.

Fig.1

Fig.2

EP 2 381 270 A1

Fig.3

Fig.4

Fig.5

Europäisches
Patentamt

European
Patent Office

Office européen
des brevets

**RAPPORT DE RECHERCHE EUROPEENNE**

Numéro de la demande

EP 11 00 2814

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2010/016029 A1 (UNIV ROMA [IT]; GALATI GASPARE [IT]) 11 février 2010 (2010-02-11) * figure 1 * * revendication 1 * * page 1, ligne 7 - ligne 10 * ----- | 1-15 | INV. G01S13/87 |
| Y | US 2008/062043 A1 (GEZICI SINAN [US] ET AL) 13 mars 2008 (2008-03-13) * alinéa [0025] * * revendication 5 * ----- | 1-15 | |
| A | FR 2 836 554 A1 (DE SALABERRY BERNARD LUCIEN CH [FR]; MAILLARD PIERRE EUGENE MARCEL [FR] 29 août 2003 (2003-08-29) * abrégé * * page 6 * * page 9 * ----- | 4 | |

DOMAINES TECHNIQUES
RECHERCHES (IPC)

G01S

Le présent rapport a été établi pour toutes les revendications

| Lieu de la recherche | Date d'achèvement de la recherche | Examinateur |
|---|---|---|
| La Haye | 27 avril 2011 | Renaudie, Cécile |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 00 2814

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-04-2011

| Document brevet cité au rapport de recherche | Date de publication | Membre(s) de la famille de brevet(s) | Date de publication |
|---|---|---|---|
| WO 2010016029 A1 | 11-02-2010 | AUCUN | |
| US 2008062043 A1 | 13-03-2008 | JP 2008070352 A | 27-03-2008 |
| FR 2836554 A1 | 29-08-2003 | AUCUN | |

EPO FORM P0460

Pour tout renseignement concernant cette annexe : voir Journal Officiel de l'Office européen des brevets, No.12/82

**EP 2 381 270 A1**

**Documents brevets cités dans la description**

- WO 2010016029 A
- US 2008062043 A
- FR 2836554

- US 2008204307 A
- EP 1865337 A
- WO 2007063126 A